# EUROPEAN PATENT SPECIFICATION

(11) **EP 2 275 289 B1**
(45) Date of publication and mention of the grant of the patent: **12.02.2014**
(21) Application number: 09165541.5
(22) Date of filing: 15.07.2009
(51) Int. Cl.: B60G 5/047, B60G 5/053, B60G 11/04, B60G 11/10

(54) **Central spring support for a cantilever spring suspension in a vehicle, especially with two axles**
Zentrale Federstütze für eine Auslegerfederaufhängung in einem Fahrzeug, insbesondere mit zwei Achsen
Support à ressort central pour suspension à ressort de cantilever dans un véhicule, spécialement avec deux axes

(43) Date of publication of application: 19.01.2011
(73) Proprietor: IVECO MAGIRUS AG, 89079 Ulm (DE)
(72) Inventor: Eisenhardt, Daniel, 89077 Ulm (DE); Baur, Guenter, 73340 Amstetten (DE)
(74) Representative: Borsano, Corrado

(56) References cited:
- WO-A-03/072377
- US-A- 2 481 891
- US-A- 3 099 459
- US-A- 5 437 439

## Description

### Field of the invention

The present invention relates to a central spring support for a pivoted spring suspension in a vehicle, especially with two axles.

### Description of the prior art

A pivoted spring suspension system for a vehicle, especially a heavy vehicle with two axles connected to the suspension, can be of the known type in which the leaf springs are fixed at the middle to the holding structure connected to the vehicle frame.

The two flexible ends of the leaf springs are connected to two respective axles of the vehicle (which axles can be both driving axles) with special spring supports.

In the known types of pivoted spring suspension the fixing system of the leaf springs at the middle of the holding structure is made of a complicated structure with considerably high number of components, with high weight and cost, and time consuming assembling procedures. Generally these components are not optimized also in terms of torsional stresses, and vertical, horizontal, lateral forces generated by the vehicle axles especially when running.

The patent US 5437439 is believed to be closest prior art, showing the features in the preamble of the appended claim 1.

### Summary of the invention

The main object of the present invention to provide a central spring support for a pivoted spring suspension in a vehicle, especially with two axles, able to overcome the above mentioned drawbacks of the known solutions.

It is a particular object of the present invention a central spring support for a pivoted spring suspension of a vehicle, for connection of the leaf springs of the pivoted spring suspension to pivoting extensions of the supporting structure of the suspension, comprising two casting parts, two half-bearings, and two spring fastening brackets, the latter to fasten the middle of said leaf springs over respectively said two casting parts, said two half-bearings, and said pivoting extensions.

These and further objects are achieved by means of a central spring support for a pivoted spring suspension in a vehicle, especially with two axles, as described in the attached claims, which are considered an integral part of the present description.

### Brief description of the drawings

The invention will become fully clear from the following detailed description, given by way of a mere exemplifying and non limiting example, to be read with reference to the attached drawing figures, wherein:
- Figures 1 and 2 show two lateral prospective views of a support for the whole of the pivoted spring suspension, with an enlarged view of the particular relating to the central spring support subject of the invention;
- Figure 3 shows an exploded lateral prospective view of the central spring support subject of the invention;
- Figure 4 shows the rubber-metal bearing;
- Figure 5 shows a sectional view of the whole of the central spring support.

The same reference numerals and letters in the figures designate the same or functionally equivalent parts.

### Description of the preferred embodiment

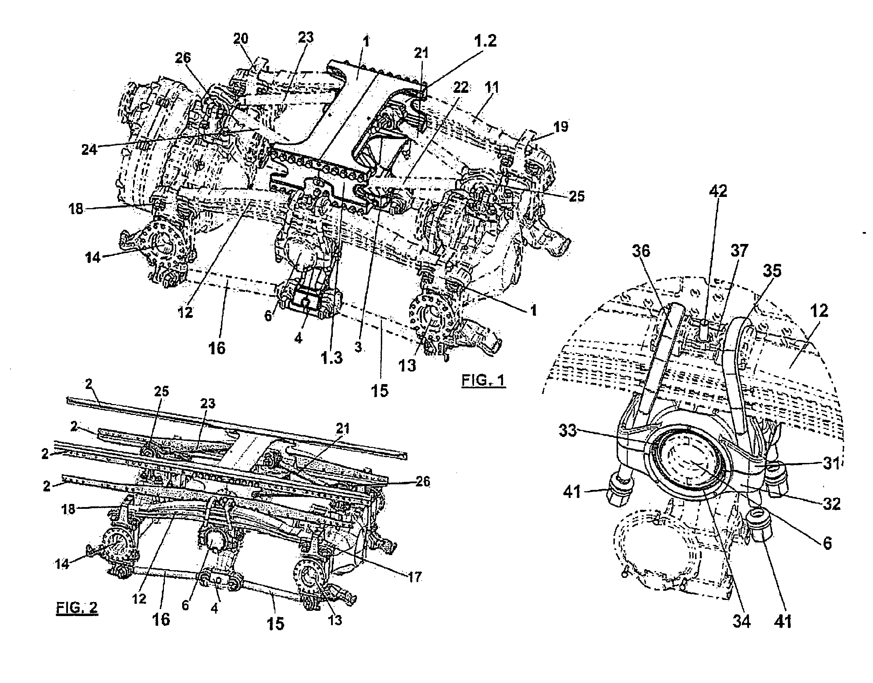

Figures 1 and 2 show a possible non limiting form of a support for the whole of the pivoted spring suspension. The structure comprises a transversal central part 1 with two longitudinally elongated terminations 1.2, 1.3 to be fitted with and connected to the elongated longitudinal members 2 of the vehicle frame.

Under the two longitudinally elongated terminations 1.2, 1.3 of the central part there are connected two substantially vertical elongated arms with respective holding termination 3 and 4. Along the two elongated arms there are connected two respective substantially horizontal pivoting extensions towards the outside of the support. Only one extension (6) is visible on one side of the support.

The lateral surface of the pivoting extensions comprises two truncated conical parts 6.1, 6.2, facing to each other, with a central annular groove 8. The global shape of the contour around the groove is concave, or it could also be convex.

The figures also show two pivoted springs 11, 12 and two vehicle axles 13, 14.

The two leaf springs 11, 12 are firmly connected in approximately the central part to the respective horizontal pivoting extensions (6) of the suspension support by a central spring support, which is the particular subject of the present invention described below in detail.

The particular shape of the contour of the pivoting extensions avoids the lateral shifting out of the leaf springs.

The flexible ends of the leaf springs abut against and rub over the upper of the terminations of the vehicle axles 13, 14, through respective on-axle spring supports 17, 18, 19, 20, one per each end of the two springs.

Four longitudinal rods (15, 16 visible in the figures) are connected at one end to the respective holding terminations 3, 4 of the vertical elongated arms 3 and 4, and at the other end to the lower sides of the terminations of the vehicle axles 13, 14.

Two couples of transversal rods 21, 22, 23, 24 are connected at one end to respective holding extensions inside the central part of the suspension support, and at the other end to two upper supports 25, 26 emerging centrally from the upper side of the axles 13, 14. The two couples of transversal rods form two v-shaped connections between the support of the spring suspension and the two axles, contributing to counteract lateral forces and stresses on the axles.

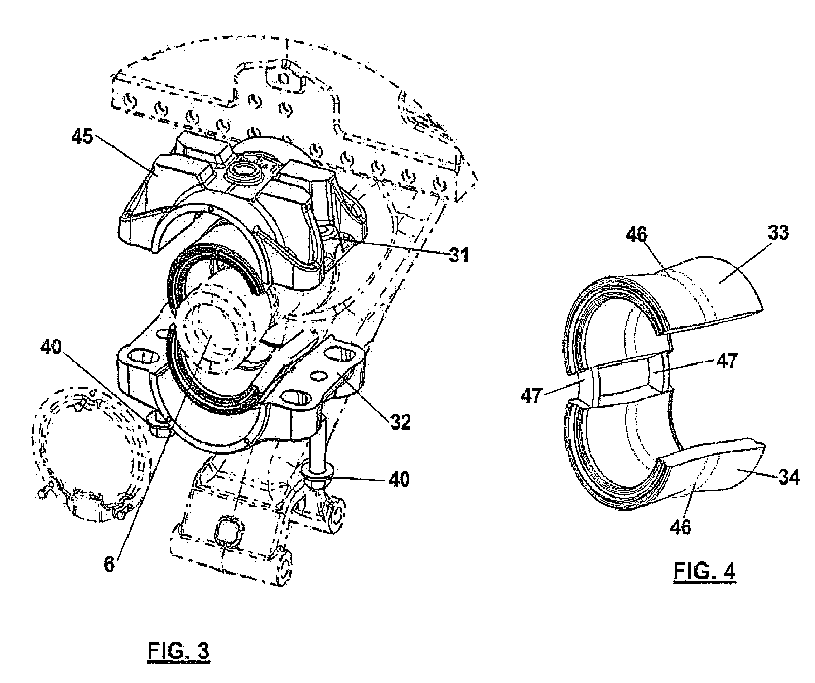

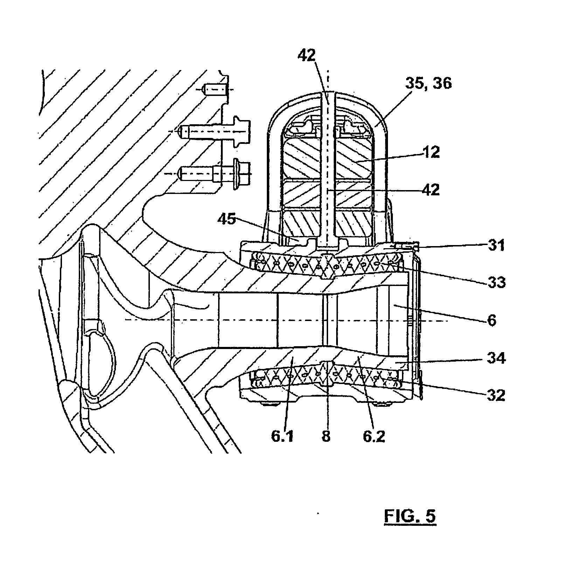

Figures 3, 4 and 5 and the enlarged particular of fig. 1 show a possible form of embodiment of the central spring support, subject of the invention.

In summary the central spring support comprises two casting parts (upper and lower bearing shell), two half-bearings (made of rubber-metal) and two spring fastening brackets. More particularly an upper bearing shell 31 and a lower bearing shell 32 have an internal substantially circular shape: externally they have holes for screws in matching lateral positions. The upper bearing shell 31 has external flat bumps 45 to fit with the shape of the leaf springs. They are preferably made of metal.

An upper half bearing 33 and a lower half bearing 34 have a lateral surface comprising two truncated conical parts, facing to each other, with a central annular boss 46. The global shape of the contour around the groove is concave, or it could also be convex. The two halves are preferably connected in one side by shackles 47. They are preferably made of rubber-metal.

Preferably the internal shape of the upper bearing shell 31 and the lower bearing shell 32 matches the truncated conical shape of the upper half bearing 33 and lower half bearing 34 respectively, as well as the truncated conical shape of the horizontal pivoting extensions (5, 6) of the support for the whole of the pivoted spring suspension.

The central annular boss 46 of the two half bearings matches with the annular grooves in the horizontal pivoting extensions and in the bearing shells.

Two fastening brackets 35, 36, preferably U-shaped, are devoted to fasten the bearings and the bearing shells over the horizontal pivoting extensions.

Preferably an upper fastening shell 37 is placed between the fastening brackets and the leaf spring, to better match the respective forms.

Screws and nuts 40, 41, 42 are used to fasted firmly all the components.

One example of assembling procedure provides first for putting the two halves of the rubber-metal bearings 33, 34 around the horizontal pivoting extensions, so as the central annular boss 46 matches the groove 8 of the horizontal pivoting extensions. Then pressing, by the screws 40, the rubber-metal bearings on the horizontal pivoting extensions with the two halves of the bearing shells 31, 32, so as the central annular boss 46 matches the groove of the bearing shells. Then putting the middle part of the leaf springs 11, 12 on the flat bumps 45 of the upper half bearing shell 31. Preferably an hole in the middle of the upper bearing shell hosts a screw 42 suitable for passing through a corresponding hole in the leaf spring to be tight by a nut, or it can be a pivoting extension 42 passing through the hole without nut. Then the two fastening brackets 35, 36 are inserted in and passed through the corresponding holes of the bearing shells, and tightening by nuts all of the elements together.

The advantages deriving from the use of the central spring support are evident..

It can be used for the application of tandem rear axle suspension, most commonly used for OFF-road vehicles and construction vehicles (e. g. concrete mixers, tippers).

The functional characteristics and behaviour of the central spring support can be summarized as follows:
- Torsional displacement of max. ±13°
- Vertical forces up to 320 kN (= 2x16 tons)
- leading vertical forces into the next chassis parts.

The torsional displacement of ±13° is realized by the displacement inside the rubber layers. There is no abrasion: the rubber does not slip neither on the pivot surface nor on the bearing shells.

In comparison with the known solutions, the central spring support according to the invention is more economical. It needs less parts, has less weight (till about -25 kg). There is no maintenance and no adjustment of the support necessary. The whole assembly is in a much less complex way than the current solution. The same central spring support assembly can be used for different types of cantilever suspension.

Further implementation details will not be described, as the man skilled in the art is able to carry out the invention starting from the teaching of the above description.

## Claims

1. Central spring support for a pivoted spring suspension of a vehicle, for connection of the leaf springs of the pivoted spring suspension to pivoting extensions (6) of the supporting structure of the suspension, comprising two casting parts (31, 32), two half-bearings (33, 34), and two spring fastening brackets (35, 36) the latter to fasten the middle of said leaf springs over respectively said two casting parts, said two half-bearings, and said pivoting extensions
**Characterized in that**
the two half-bearings (33, 34) comprise an upper half bearing (33) and a lower half bearing (34) having a lateral surface consisting of two truncated conical parts, facing to each other, with a central annular boss 46).

2. Central spring support according to claim 1, wherein said two casting parts comprise upper and lower metal bearing shells (31, 32).

3. Central spring support according to claim 2, wherein the internal shape of the upper bearing shell (31) and the lower bearing shell (32) match the truncated conical shape of the upper half bearing (33) and lower half bearing (34) respectively.

4. Central spring support according to claim 3, wherein said central annular boss (46) matches with a corresponding annular groove centrally in the upper and lower rubber-metal half bearings (33, 34).

5. Central spring support according to claim 1, wherein said two spring fastening brackets (35, 36) have a U-shape.

## Patentansprüche

1. Zentrale Feder-Stütze für eine Schwenk-Feder-Aufhängung eines Fahrzeugs zum Verbinden der Blattfedern der Schwenk-Feder-Aufhängung mit schwenkbaren Erstreckungen (6) der stützenden Struktur der Aufhängung, umfassend zwei Guss-Teile (31, 32), zwei Halb-Lager (33, 34) und zwei Feder-Befestigungs-Klammern (35, 36), wobei die Letztgenannten einem Befestigen der Mitte der Blattfedern über jeweils die beiden Guss-Teile, die beiden Halb-Lager und die schwenkbaren Erstreckungen dienen,
**dadurch gekennzeichnet, daß**
die zwei Halb-Lager (33, 34) ein oberes Halb-Lager (33) und ein unteres Halb-Lager (34) umfassen, die eine Seitenfläche aufweisen, die aus zwei Kegelstumpf-Teilen, die zueinander zeigen, mit einem zentralen ringförmigen Ansatz (46) besteht.

2. Zentrale Feder-Stütze nach Anspruch 1, worin die zwei Guss-Teile obere und untere Metall-Lager-Schalen (31, 32) umfassen.

3. Zentrale Feder-Stütze nach Anspruch 2, worin sich die Innen-Form der oberen Lager-Schale (31) und der unteren Lager-Schale (32) an die Kegelstumpf-Form des oberen Halb-Lagers (33) bzw. des unteren Halb-Lagers (34) anpaßt.

4. Zentrale Feder-Stütze nach Anspruch 3, worin sich der zentrale ringförmige Ansatz (46) an eine entsprechende ringförmige Fuge zentral in den oberen und unteren Kautschuk-Metall-Halb-Lagern (33, 34) anpaßt.

5. Zentrale Feder-Stütze nach Anspruch 1, worin die beiden Feder-Befestigungs-Klammern (35, 36) U-Form haben.

## Revendications

1. Support de ressort central pour une suspension à ressort à pivotement d'un véhicule, pour le raccordement des ressorts à lames de la suspension à ressort à pivotement à des extensions pivotantes (6) de la structure de support de la suspension, comprenant deux parties de coulée (31, 32), deux demi-coussinets (33, 34), et deux consoles de fixation de ressort (35, 36), ces dernières servant à fixer le milieu desdits ressorts à lames sur respectivement lesdites deux parties de coulée, lesdits deux demi-coussinets et lesdites extensions pivotantes
**caractérisé en ce que**
les deux demi-coussinets (33, 34) comprennent un demi-coussinet supérieur (33) et un demi-coussinet inférieur (34) ayant une surface latérale consistant en deux parties coniques tronquées, se faisant face l'un l'autre, avec un bossage annulaire central (46).

2. Support de ressort central selon la revendication 1, dans lequel lesdites deux parties de coulée comprennent des coquilles de coussinets métalliques supérieur et inférieur (31, 32).

3. Support de ressort central selon la revendication 2, dans lequel la forme interne de la coquille de coussinet supérieur (31) et de la coquille de coussinet inférieur (32) est en accord avec la forme conique tronquée du demi-coussinet supérieur (33) et du demi-coussinet inférieur (34) respectivement.

4. Support de ressort central selon la revendication 3, dans lequel ledit bossage annulaire central (46) est en accord avec une rainure annulaire correspondante centralement dans les demi-coussinets (33, 34) en caoutchouc-métal supérieur et inférieur.

5. Support de ressort central selon la revendication 1, dans lequel lesdites deux consoles de fixation de ressort (35, 36) ont une forme en U.
